# EUROPEAN PATENT APPLICATION

(11) **EP 3 263 309 A1**
(43) Date of publication of application: **03.01.2018**
(21) Application number: 16755349.4
(22) Date of filing: 19.02.2016
(51) Int. Cl.: B29C 45/27, B01D 39/00, B01D 39/16, B29D 28/00

(54) **INJECTION MOLDING DIE FOR MESH FILTER AND INJECTION MOLDING METHOD FOR MESH FILTER**

(30) Priority: 23.02.2015 JP 2015032498
(71) Applicant: Enplas Corporation, Kawaguchi-shi, Saitama 332-0034 (JP)
(72) Inventor: TAKI, Kenjiro, Kawaguchi-shi Saitama 332-0034 (JP); MAKINO, Yasuyuki, Kawaguchi-shi Saitama 332-0034 (JP)
(74) Representative: Prinz & Partner mbB
(86) International application number: PCT/JP2016/054800
(87) International publication number: WO 2016/136603

(57) **Abstract**

[Object]

To suppress variations in the filling rate of molten resin in a cavity and suppress the occurrence of burrs in the opening of a filter portion.

[Solution]

Four gates 18 are provided in one end surface 14a of the inner cylinder cavity section 14 of an injection molding die 10 along the circumferential direction of an inner cylinder cavity section 14. The gates 18 are disposed in intermediate parts between a first central line 20 and a second central line 21 when the first central line 20 passes through the center of the inner cylinder cavity section 14 in parallel to the X-axis and the second central line 21 passes through the center of the inner cylinder cavity section 14 in parallel to the Y-axis on an X-Y plane orthogonal to a central axis 17 of the inner cylinder cavity section 14. The gates 18 are opened in the positions in which the filling rate is apt to reduce in the filter portion cavity section 16 and the gates 18 are not opened in the positions in which the filling rate is apt to increase in the filter portion cavity section 16.

## Description

### Technical Field

The present invention relates to the injection molding die for a mesh filter used to filter out foreign matter in a fluid and the injection molding method for the mesh filter.

### Background Art

A mesh filter is disposed at an intermediate point of, for example, a fuel supply pipe connected to the fuel injection apparatus of a vehicle or an oil pipe of the lubrication apparatus or the like of a vehicle so as to filter out foreign matter in a fluid such as fuel or oil.

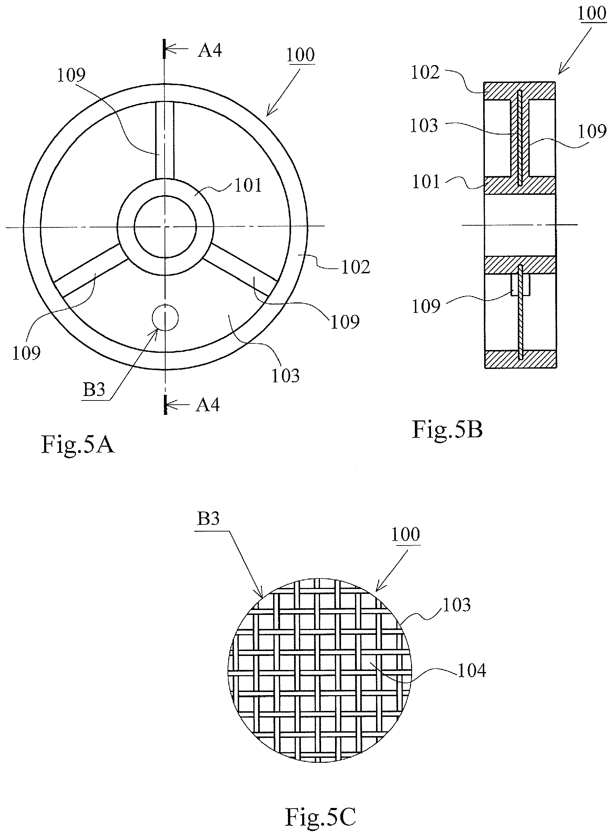

Fig. 5 illustrates an example of such a mesh filter 100. This mesh filter 100 includes a cylindrical inner cylinder 101, a cylindrical outer cylinder 102 positioned concentrically with the inner cylinder 101, and a filter portion 103 positioned so as to connect the inner cylinder 101 and the outer cylinder 102 in the radial direction. The filter portion 103 is provided with many rectangular openings 104 that depend on the size of foreign matter to be filtered out so as to filter out the foreign matter larger than the openings 104 and pass the foreign matter smaller than the openings 104. It should be noted that the inner cylinder 101 and the outer cylinder 102 are connected by a plurality of radial direction ribs 109.

As the manufacturing method for the mesh filter 100 as described above, there is proposed a method (insertion molding method) in which a filter member into which resin fiber has been woven in a lattice pattern is machined like a hollow disc, the machined filter member is housed in the cavity of a die, and the cavity section for shaping the inner cylinder and the cavity section for shaping the outer cylinder of the die are filled with molten resin so as to integrally form the inner cylinder at the radially inward end of the filter member and integrally form the outer cylinder at the radially outward end of the filter member (see, for example, PTL 1 and PTL 2). In addition, as another manufacturing method for the mesh filter 100, there is a method in which the entire mesh filter 100 is integrally molded by injection molding.

However, when the mesh filter 100 is manufactured by the insertion molding method, manufacturing man-hours are increased as compared with the case in which the entire mesh filter 100 is integrally molded by injection molding because another process for housing the filter member in a predetermined position in the cavity is necessary.

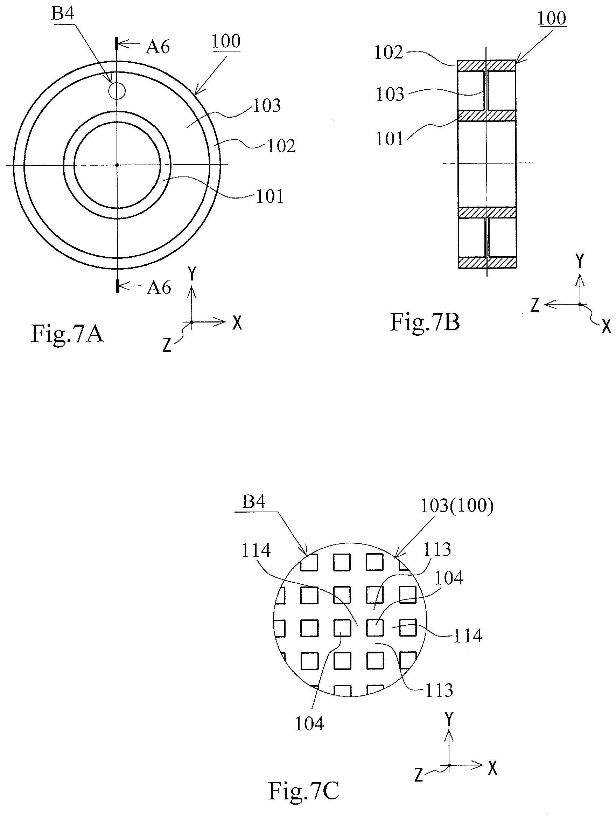

Accordingly, the applicant of this application has integrally molded the mesh filter 100 illustrated in Fig. 7 using injection molding by applying the injection molding method for a gear 200 having the structure similar to that of the mesh filter 100 to the manufacturing of the mesh filter 100.

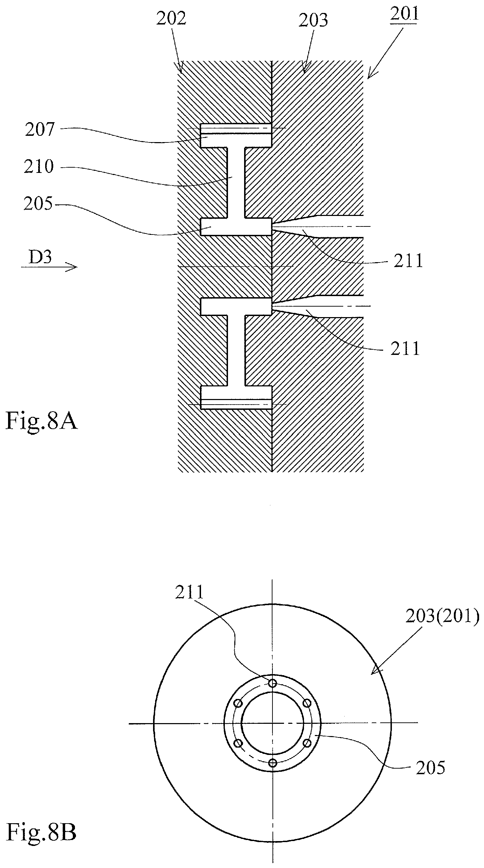

Fig. 8 is a diagram illustrating an injection molding die 201 for the gear 200. Fig. 8A is a vertical cross sectional view illustrating the injection molding die 201 for the gear 200, and Fig. 8B is a plan view (in which a first die 203 is seen along direction D3 in Fig. 8A) illustrating the first die 203 in the state in which a second die 202 is opened.

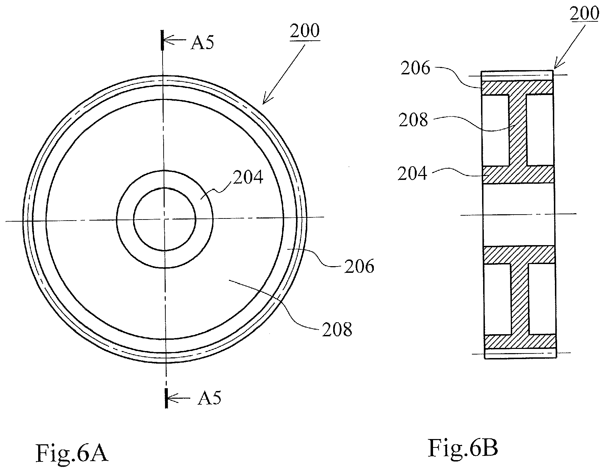

As illustrated in Fig. 8, the injection molding die 201 for the gear 200 includes an inner cylinder cavity section 205 for shaping an inner cylinder (boss) 204, an outer cylinder cavity section 207 for shaping an outer cylinder (tooth portion) 206, and a web cavity section 210 for shaping a discoid web 208 connecting the inner cylinder 204 and the outer cylinder 206 (see Fig. 6). In the inner cylinder cavity section 205, six gates 211 for injection molding are disposed at regular intervals along the circumferential direction of the inner cylinder cavity section 205. In the injection molding die 201 as described above, the molten resin having been injected from the six gates 211 to the inner cylinder cavity section 205 flows radially and evenly from the inner cylinder cavity section 205 to the radial outside of the web cavity section 210, fills the web cavity section 210, and then fills the outer cylinder cavity section 207 (see PTL 3).

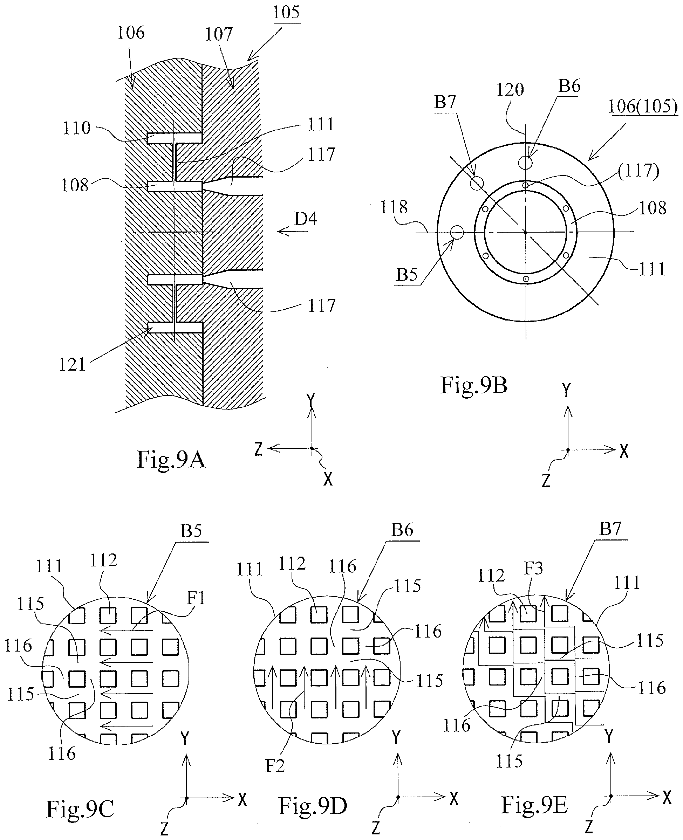

Fig. 9 is a diagram illustrating an injection molding die 105 for the mesh filter 100. Fig. 9A is a vertical cross sectional view illustrating the injection molding die 105 for the mesh filter 100, Fig. 9B is a plan view (in which a second die 106 is seen along direction D4 in Fig. 9A and gates 117 of a first die 107 are superimposed thereon) illustrating the second die 106 in the state in which the second die 106 is opened, Fig. 9C is an enlarged view illustrating part B5 in Fig. 9B, Fig. 9D is an enlarged view illustrating part B6 in Fig. 9B, and Fig. 9E is an enlarged view illustrating part B7 in Fig. 9B.

As illustrated in Fig. 9, the injection molding die 105 for the mesh filter 100 includes an inner cylinder cavity section 108 for shaping the inner cylinder 101, an outer cylinder cavity section 110 for shaping the outer cylinder 102, and a filter portion cavity section 111 for shaping the filter portion 103 connecting the inner cylinder 101 and the outer cylinder 102 (see Fig. 7). In the injection molding die 105 for the mesh filter 100, a plurality of projections 112 for shaping the openings 104 of the filter portion 103 is formed at regular intervals in the part of the second die 106 for configuring the filter portion cavity section 111 and the spaces between the projections 112 are horizontal rib formation groove portions 115 for shaping horizontal ribs 113 of the filter portions 103 and vertical rib formation groove portions 116 for forming vertical ribs 114 of the filter portion 103. In addition, in the first die 107 of the injection molding die 105, the six gates 117 opened in the inner cylinder cavity section 108 are formed at regular intervals along the circumferential direction of the inner cylinder cavity section 108.

### Citation List

### Patent Literature

PTL 1: JP-UM-A-5-44204
PTL 2: JP-A-2007-1232
PTL 3: Japanese Patent No. 4229687

### Summary of Invention

### Technical Problem

However, as illustrated in Fig. 7C, the filter portion 103 of the mesh filter 100 has the structure in which the rectangular openings 104 are shaped by the horizontal ribs 113 and the vertical ribs 114 and this structure is different from that of the discoid web 208 of the gear 200. Accordingly, as illustrated in Fig. 9, when the injection molding technique for the gear 200 is applied to the manufacturing of the mesh filter 100 as is, since the molten resin having flowed radially from the inner cylinder cavity section 108 toward the radial outside of the filter portion cavity section 111, flows linearly moving through the horizontal rib formation groove portions 115 formed along the X-axis in the vicinity of a central line 118 parallel to the X-axis have high speed (see flows F1 of molten resin illustrated simply in Fig. 9C), flows linearly moving through the vertical rib formation groove portions 116 formed along the Y-axis in the vicinity of a central line 120 parallel to the Y-axis have high speed (see flows F2 of molten resin illustrated simply in Fig. 9D), and flows moving, in zigzags, through the horizontal rib formation groove portions 115 and the vertical rib formation groove portions 116 disposed in intermediate parts between the central line 118 and the central line 120 have low speed (see flows F3 of molten resin illustrated simply in Fig. 9E), thereby causing variations in the filling rate in a cavity 121.

In addition, as illustrated in Fig. 7 and Fig. 9, in the filter portion 103 of the mesh filter 100, when the gates 117 are disposed in the central line 120 parallel to the Y-axis and the vertical ribs 114 are formed along the central line 120 parallel to the Y-axis, burrs are generated in the openings 104 in the vicinity of the central line 120 parallel to the Y-axis, the burrs block the openings 104 in the vicinity of the central line 120 parallel to the Y-axis, and the filter function is reduced.

Accordingly, the invention provides an injection molding die for a mesh filter and an injection molding method for a mesh filter that are capable of suppressing variations in the filling rate of molten resin in the cavity and suppressing the generation of burrs in the openings of a filter portion.

### Solution to Problem

The invention relates to an injection molding die 10 for a mesh filter 1 used to filter out foreign matter in a fluid. In the invention, the mesh filter 1 includes a cylindrical inner cylinder 2, a cylindrical outer cylinder 3 surrounding the inner cylinder 2, and a filter portion 4 connecting an outer peripheral surface 3 of the inner cylinder 2 and an inner peripheral surface 3a of the outer cylinder 3 along a radial direction of the inner cylinder 2. In addition, the filter portion 4 is formed along an X-Y plane that is a virtual plane orthogonal to a central axis 5 of the inner cylinder 2. In addition, a plurality of rectangular openings 8 is formed in a part of the filter portion 4, the part being other than the connection portion between the inner cylinder 2 and the outer cylinder 3, by a plurality of vertical ribs 6 formed at regular intervals so as to be orthogonal to the X-axis and parallel to the Y-axis and a plurality of horizontal ribs 7 formed at regular intervals so as to be orthogonal to the vertical ribs 6 and parallel to the X-axis. In addition, an inner cylinder cavity section 14 for shaping the inner cylinder 2 of a cavity 13 for shaping the mesh filter 1 is provided with four gates 18 opened in positions in which end surfaces 2b of the inner cylinder 2 are shaped, the four gates 18 being formed along the circumferential direction of the inner cylinder cavity section 14. In addition, the gates 18 are disposed in intermediate parts between a first central line 20 and a second central line 21 on an X-Y plane, the first central line 20 passing through the center of the inner cylinder cavity section 14 in parallel to the X-axis, the second central line 21 passing through the center of the inner cylinder cavity section 14 in parallel to the Y-axis, the X-Y plane being a virtual plane orthogonal to a central axis 17 of the inner cylinder cavity section 14. Molten resin having been injected from the gates 18 to the inner cylinder cavity section 14 flows from the inner cylinder cavity section 14 to a filter portion cavity section 16 for shaping the filter portion 4 and then fills an outer cylinder cavity section 15 for shaping the outer cylinder 3 from the filter portion cavity section 16.

In addition, the invention relates to an injection molding method for a mesh filter 1 used to filter out foreign matter in a fluid. In the invention, the mesh filter 1 includes a cylindrical inner cylinder 2, a cylindrical outer cylinder 3 surrounding the inner cylinder 2, and a filter portion 4 connecting an outer peripheral surface 2a of the inner cylinder 2 and an inner peripheral surface 3a of the outer cylinder 3 along a radial direction of the inner cylinder 2. In addition, the filter portion 4 is formed along an X-Y plane that is a virtual plane orthogonal to a central axis 5 of the inner cylinder 2. In addition, a plurality of rectangular openings 8 is formed in a part of the filter portion 4, the part being other than the connection portion between the inner cylinder 2 and the outer cylinder 3, by a plurality of vertical ribs 6 formed at regular intervals so as to be orthogonal to the X-axis and parallel to the Y-axis and a plurality of horizontal ribs 7 formed at regular intervals so as to be orthogonal to the vertical ribs 6 and parallel to the X-axis. In addition, an inner cylinder cavity section 14 for shaping the inner cylinder 2 of the injection molding die 10 for the mesh filter 1 is provided with four gates 18 opened in positions in which end surfaces 2b of the inner cylinder 2 are shaped, the four gates 18 being formed along the circumferential direction of the inner cylinder cavity section 14. In addition, the gates 18 are disposed in intermediate parts between a first central line 20 and a second central line 21 on an X-Y plane, the first central line 20 passing through the center of the inner cylinder cavity section 14 in parallel to the X-axis, the second central line 21 passing through the center of the inner cylinder cavity section 14 in parallel to the Y-axis, the X-Y plane being a virtual plane orthogonal to a central axis 17 of the inner cylinder cavity section 14. Molten resin having been injected from the gates 18 to the inner cylinder cavity section 14 flows from the inner cylinder cavity section 14 to a filter portion cavity section 16 for shaping the filter portion 4 and then fills an outer cylinder cavity section 15 for shaping the outer cylinder 3 from the filter portion cavity section 16.

### Advantageous Effects of Invention

According to the invention, four gates opened in the positions in which the end surface of the inner cylinder is shaped are provided along the circumferential direction of the inner cylinder cavity section, the gates are opened in the positions in which the filling rate is apt to reduce in the filter portion cavity section, and the gates are not opened in the positions in which the filling rate is apt to increase in the filter portion cavity section. Accordingly, it is possible to suppress variations in the filling rate of molten resin in the cavity and suppress the occurrence of burrs in the openings of the filter portion.

### Brief Description of Drawings

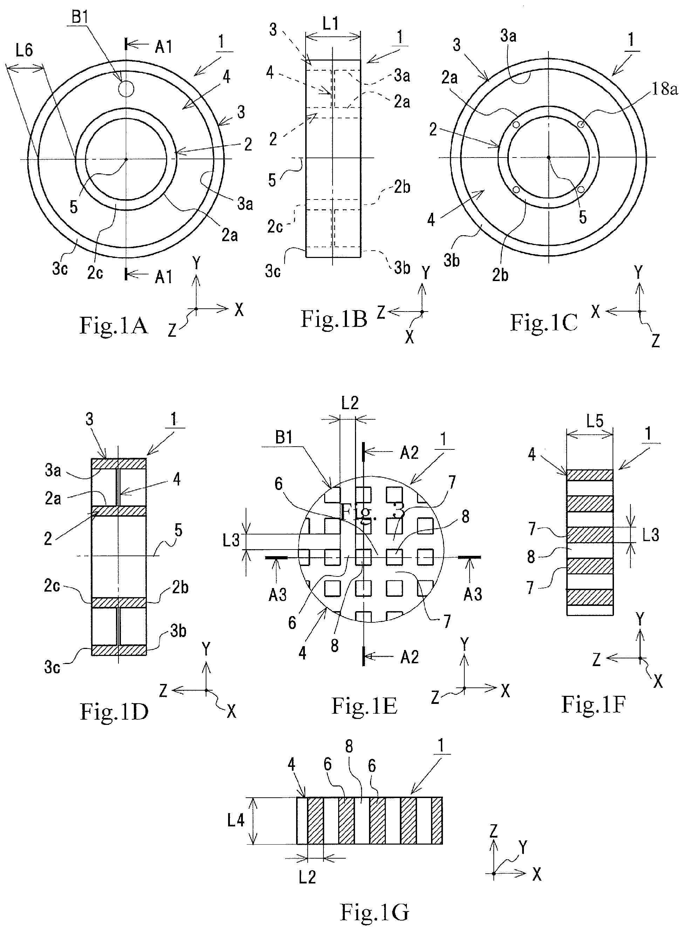

[Fig. 1] Fig. 1 is a diagram illustrating a mesh filter molded by an injection molding die and an injection molding method according to the first embodiment of the invention, Fig. 1A is a front view illustrating the mesh filter, Fig. 1B is a side view illustrating the mesh filter, Fig. 1C is a back view illustrating the mesh filter, Fig. 1D is a cross sectional view illustrating the mesh filter taken along line A1-A1 in Fig. 1A, Fig. 1E is an enlarged view illustrating part B1 in Fig. 1A, Fig. 1F is a cross sectional view taken along line A2-A2 in Fig. 1E, and Fig. 1G is a cross sectional view taken along line A3-A3 in Fig. 1E.

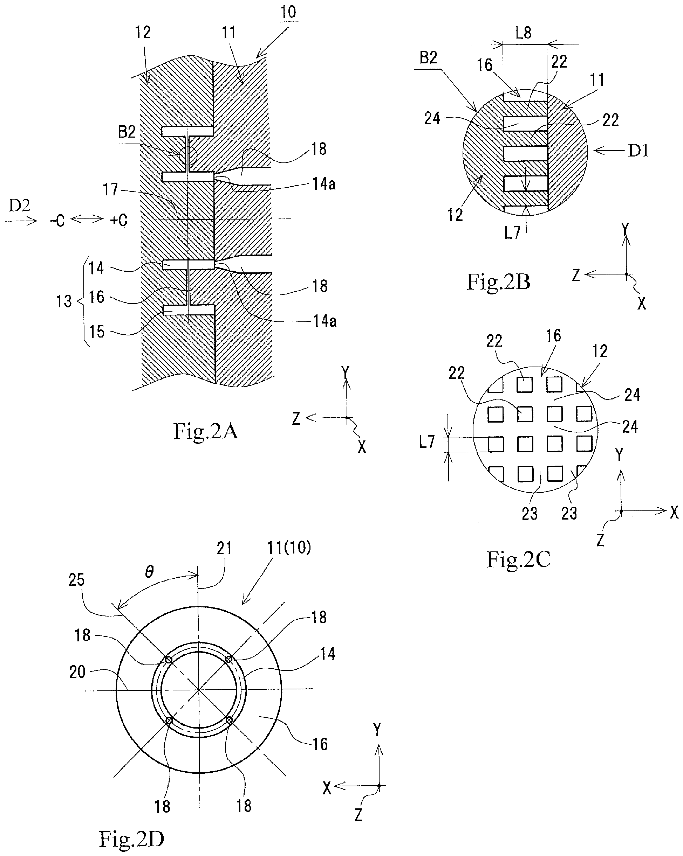

[Fig. 2] Fig. 2 is a diagram illustrating the injection molding die according to the first embodiment of the invention, Fig. 2A is a vertical cross sectional view illustrating the injection molding die, Fig. 2B is an enlarged view illustrating part B2 in Fig. 2A, Fig. 2C is a plan view illustrating a part of a second die seen from direction D1 in Fig. 2B, and Fig. 2D is a plan view illustrating a first die seen from direction D2 in Fig. 2A in the state in which the die is opened.

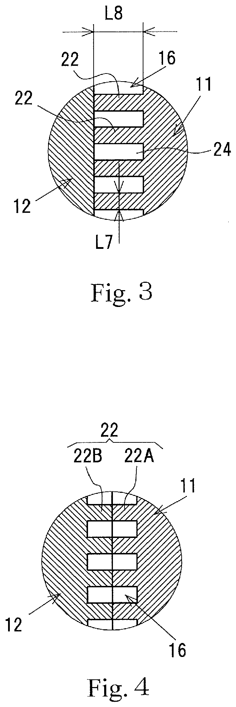

[Fig. 3] Fig. 3 is a diagram (diagram corresponding to Fig. 2B) illustrating a first modification of the injection molding die, more specifically a modification of projections for shaping the openings of the mesh filter.
[Fig. 4] Fig. 4 is a diagram illustrating a second modification of the injection molding die, more specifically a diagram (the drawing corresponds to Fig. 2B) illustrating a modification of projections for shaping the openings of the mesh filter.
[Fig. 5] Fig. 5 is a diagram illustrating a mesh filter according to a first conventional example, Fig. 5A is a front view illustrating the mesh filter, Fig. 5B is a cross sectional view illustrating the mesh filter taken along line A4-A4 in Fig. 5A, and Fig. 5C is an enlarged view illustrating part B3 in Fig. 5A.
[Fig. 6] Fig. 6 is a diagram illustrating an injection-molded gear, Fig. 6A is a front view illustrating the gear, and Fig. 6B is a cross sectional view illustrating the gear taken along line A5-A5 in Fig. 6A.
[Fig. 7] Fig. 7 is a diagram illustrating an injection-molded mesh filter according to a conventional example (second conventional example), Fig. 7A is a front view illustrating the mesh filter, Fig. 7B is a cross sectional view illustrating the mesh filter taken along line A6-A6 in Fig. 7A, and Fig. 7C is an enlarged view illustrating part B4 in Fig. 7A.
[Fig. 8] Fig. 8 is a diagram illustrating an injection molding die for a gear, Fig. 8A is a vertical cross sectional view illustrating the injection molding die for a gear, and Fig. 8B is a plan view (in which the first die is seen along direction D3 in Fig. 8A) illustrating the first die in the state in which the second die is opened.
[Fig. 9] Fig. 9 is a diagram illustrating an injection molding die for the mesh filter according to the second conventional example, Fig. 9A is a vertical cross sectional view illustrating the injection molding die for the mesh filter, Fig. 9B is a plan view (in which the second die is seen along direction D4 in Fig. 9A and the gates of the first die are superimposed thereon) illustrating the second die in the state in which the second die is opened, Fig. 9C is an enlarged view illustrating part B5 in Fig. 9B, Fig. 9D is an enlarged view illustrating part B6 in Fig. 9B, and Fig. 9E is an enlarged view illustrating part B7 in Fig. 9B.

### Description of Embodiments

An embodiment of the invention will be described below with reference to the drawings.

### [First embodiment]

Fig. 1 is a diagram illustrating the mesh filter 1 injection-molded by the injection molding die 10 and the injection molding method according to the invention. Fig. 1A is a front view illustrating the mesh filter 1, Fig. 1B is a side view illustrating the mesh filter 1, Fig. 1C is a back view illustrating the mesh filter 1, Fig. 1D is a cross sectional view illustrating the mesh filter 1 taken along line A1-A1 in Fig. 1A. In addition, Fig. 1E is an enlarged view (partial enlarged view illustrating the mesh filter 1) illustrating part B1 in Fig. 1A, Fig. 1F is a cross sectional view (partial enlarged cross sectional view illustrating the mesh filter 1) taken along line A2-A2 in Fig. 1E, and Fig. 1G is a cross sectional view (partial enlarged cross sectional view illustrating the mesh filter 1) taken along line A3-A3 in Fig. 1E.

As illustrated in Fig. 1, the mesh filter 1 integrally includes the cylindrical inner cylinder 2 (inner frame), the cylindrical outer cylinder 3 (outer frame surrounding the inner frame) concentric with the inner cylinder 2, the filter portion 4 connecting the outer peripheral surface 2a of the inner cylinder 2 and the inner peripheral surface 3a of the outer cylinder 3 along the radial direction. The entire mesh filter 1 is integrally formed of a resin material (for example, nylon 66). The mesh filter 1 as described above is disposed in, for example, a fuel supply pipe connected to the fuel injection apparatus of a vehicle. The inner cylinder 2 and the outer cylinder 3 are attached to the fuel supply pipe or the like via a seal member (not illustrated) so as to prevent the fuel (fluid) passing through the filter portion 4 from leaking. In addition, in the embodiment, the outer diameter of the inner cylinder 2 is 10 mm and the outer diameter of the outer cylinder 3 is 16 mm. In addition, the wall thickness of the inner cylinder 2 is 1 mm and the wall thickness of the outer cylinder 3 is 1 mm. It should be noted that the values related to the inner cylinder 2 and the outer cylinder 3 are only examples for easy understanding of the invention and are changed as appropriate depending on the use conditions and the like.

The inner cylinder 2 and the outer cylinder 3 have the same length L1 along the central axis 5, have the one end surfaces 2b and 3b along the central axis 5 positioned on the same virtual plane orthogonal to the central axis 5, and have the other end surfaces 2c and 3c along the central axis 5 positioned on the same virtual plane orthogonal to the central axis 5. The relationship between the inner cylinder 2 and the outer cylinder 3 is not limited to the embodiment, the inner cylinder 2 and the outer cylinder 3 may be deformed depending on the state in which the mesh filter 1 is attached, the dimensions of the inner cylinder 2 and the outer cylinder 3 along the central axis 5 may be different from each other, and the one end surface 2b of the inner cylinder 2 along the central axis 5 may deviate from the one end surface 3b of the outer cylinder 3 along the central axis 5. In addition, the other end surface 2c of the inner cylinder 2 along the central axis 5 may deviate from the other end surface 3c of the outer cylinder 3 along the central axis 5. It should be noted that, as illustrated in Fig. 1C, the one end surface (right end surface) 2b of the inner cylinder 2 has four gate cut-off marks disposed at regular intervals along the circumferential direction.

The filter portion 4 is formed along the X-Y plane that is a virtual plane orthogonal to the direction along the central axis 5 of the inner cylinder 2. The plurality of rectangular openings 8 is formed in the part of the filter portion 4, the part being other than the connection portion between the inner cylinder 2 and the outer cylinder 3, by the plurality of vertical ribs 6 formed at regular intervals so as to be orthogonal to the X-axis and parallel to the Y-axis and the plurality of horizontal ribs 7 formed at regular intervals so as to be orthogonal to the vertical ribs 6 and parallel to the X-axis. Although the filter portion 4 is formed so as to connect, in the radial direction, the central portions of the inner cylinder 2 and the outer cylinder 3 along the central axis 5, the invention is not limited to the example and deviation to the position close to one ends of the inner cylinder 2 and the outer cylinder 3 along the central axis 5 or deviation to the position close to the other ends of the inner cylinder 2 and the outer cylinder 3 along the central axis 5 may be allowed.

An example of the dimensions of the filter portion 4 will be described below to make it easy to understand the filter portion 4 of the mesh filter 1 formed by the injection molding die 10 and the injection molding method according to the invention. First, the opening 8 of the mesh filter 1 is 0.1 mm square. In the vertical rib 6 and the horizontal rib 7, the rib width dimensions L2 and L3 (dimension L2 along the X-axis in Fig. 1E or dimension L3 along the Y-axis in Fig. 1E) between the adjacent openings 8 and 8 is 0.1 mm. In addition, the dimensions (thicknesses) L4 and L5 of the vertical rib 6 and the horizontal rib 7 along the direction (Z-axis direction in Fig. 1F or Z-axis direction in Fig. 1G) of the central axis 5 of the inner cylinder 2 are 0.3 mm. In addition, in the filter portion 4, as illustrated in Fig. 1A, the radial dimension L6 along the X-axis is set to an appropriate value from 2 mm to 5 mm depending on the structure of the mount portion of the mesh filter 1 or the like. It should be noted that the dimensions of the filter portion 4 of the mesh filter 1 injection-molded by the injection molding die 10 and injection molding method according to the invention are not limited to the above values L2 to L6.

Fig. 2 is a diagram illustrating the injection molding die (referred to below as the die) 10 used for the injection molding of the mesh filter 1. In Fig. 2, Fig. 2A is a vertical cross sectional view illustrating the die 10, Fig. 2B is an enlarged view (partial enlarged cross sectional view of the die 10) illustrating part B2 in Fig. 2A, Fig. 2C is a plan view illustrating a part of a second die 12 seen from direction D1 in Fig. 2B, and Fig. 2D is a plan view illustrating a first die 11 seen from direction D2 in Fig. 2A in the state in which the die 10 is opened. The die 10 for the mesh filter 1 according to the embodiment will be described together with the injection molding method for the mesh filter 1.

As illustrated in Fig. 2A, the die 10 is provided with the cavity 13 for injection molding of the mesh filter 1 in the parts of the first die 11 and the second die 12 close the die matching surface. The cavity 13 includes the cylindrical inner cylinder cavity section 14 for shaping the inner cylinder 2 of the mesh filter 1, the outer cylinder cavity section 15 for shaping the outer cylinder 3 of the mesh filter 1, and the hollow discoid filter portion cavity section 16 for shaping the filter portion 4 of the mesh filter 1. The first die 11 has the four gates 18 opened in one end surfaces 14a of the inner cylinder cavity section 14 along the central axis 17 so that the four gates 18 are provided at regular intervals along the circumferential direction of the inner cylinder cavity section 14 (see Fig. 2D).

As illustrated in Fig. 2D, when an X-Y plane is a virtual plane orthogonal to the central axis 17 of the inner cylinder cavity section 14, the first central line 20 passes through the center of the inner cylinder cavity section 14 in parallel to the X-axis on the X-Y plane, and the second central line 21 passes through the center of the inner cylinder cavity section 14 in parallel to the Y-axis on the X-Y plane, then the gates 18 are disposed in the positions obtained by rotating 45 degrees (θ = 45 degrees) from the first central line 20 and the second central line 21 along the circumferential direction of the inner cylinder cavity section 14.

In addition, as illustrated in Figs. 2B and 2C, the part of the second die 12 for shaping the filter portion cavity section 16 has a plurality of projections 22 (as many projections 22 as the openings 8) disposed at regular intervals. The shape of the projections 22 formed in the part of the second die 12 for shaping the filter portion cavity section 16 is a square in plan view (seen from direction D1 in Fig. 2B) and the dimension L7 of one side of the square is set to a value (for example, 0.1 mm) that enables the square openings 8 to be shaped. In addition, the projections 22 formed in the part of the second die 12 for shaping the filter portion cavity section 16 are formed so as to have a height (dimension L8 along the Z-direction in Fig. 2B) equal to the thickness (for example, 0.3 mm) of the vertical ribs 6 and the horizontal ribs 7.

As described in Fig. 2A, when the first die 11 and the second die 12 are closed in the die 10 having the structure as described above, the cavity 13 for shaping the mesh filter 1 is formed in the parts of the first die 11 and the second die 12 close the die matching surface. In addition, vertical rib formation grooves 23 and horizontal rib formation grooves 24 are formed between the projections 22 and 22 of the filter portion cavity section 16 of the cavity 13. The molten resin having been injected to the inner cylinder cavity section 14 from the four gates 18 opened in one end surface 14a (the position in which the one end surface 2b of the inner cylinder 2 is shaped) of the inner cylinder cavity section 14 radially flows from the inner cylinder cavity section 14 to the filter portion cavity section 16. At this time, the gates 18 are disposed in intermediate parts between the first central line 20 and the second central line 21, the gates 18 are opened in the positions in which the filling rate is apt to reduce in the filter portion cavity section 16, and the gates 18 are not opened in the positions in which the filling rate is apt to increase in the filter portion cavity section 16. Accordingly, the injection pressure is easily applied to positions in which the filling rate is apt to reduce in the filter portion cavity section 16 and the injection pressure is not easily applied to positions in which the filling rate is apt to increase in the filter portion cavity section 16. As a result, in the molten resin having been injected from the gates 18 to the inner cylinder cavity section 14, the flowing (the flowing, in zigzags, in the vertical rib formation grooves 23 and the horizontal rib formation grooves 24 between the projections 22 and 22 (see flow F3 in Fig. 9E)) from the opening positions of the gates 18 to the radial outside of the filter portion cavity section 16 is promoted, the flowing (the flowing in the horizontal rib formation grooves 24 between the projections 22 and 22 linearly along the first central line 20 (see flow F1 in Fig. 9C) and the flowing in the vertical rib formation grooves 23 between the projections 22 and 22 linearly along the second central line 21 (see flow F2 in Fig. 9D)) from the intermediate part between the adjacent gates 18 and 18 to the radial outside of the filter portion cavity section 16 are suppressed, thereby suppressing variations in the filling rate in the cavity 13.

After that, the molten resin flows to the outer cylinder cavity section 15 from the filter portion cavity section 16, the outer cylinder cavity section 15 is filled with the molten resin, the pressure in the cavity 13 is held at a predetermined pressure when the entire cavity 13 of the die 10 is filled with the molten resin, and then the die 10 is cooled. Next, the second die 12 is separated in the -C direction from the first die 11 (opened), the mesh filter 1 in the cavity 13 is pushed out of the cavity 13 by an ejector pin (not illustrated), and the mesh filter 1, which is an injection-molded article, is removed from the die 10 (see Fig. 1). In the mesh filter 1 injection-molded in this way, the injection pressure is not easily applied to the parts (the vicinity of the first central line 20 and the vicinity of the second central line 21) of the filter portion 4 in which burrs are easily generated, so occurrence of burrs in the openings 8 of the filter portion 4 is suppressed.

In the injection molding die 10 and the injection molding method according to the embodiment as described above, the four gates 18 opened in one end surface 14a (the position in which one the end surface 2b of the inner cylinder 2 is shaped) are provided along the circumferential direction of the inner cylinder cavity section 14, the gates 18 are disposed in intermediate parts between the first central line 20 and the second central line 21, the gates 18 are opened in the positions in which the filling rate is apt to reduce in the filter portion cavity section 16, and the gates 18 are not opened in the positions in which the filling rate is apt to increase in the filter portion cavity section 16. Accordingly, it is possible to suppress variations in the filling rate of molten resin in the cavity 13 and suppress the occurrence of burrs in the openings 8 of the filter portion 4 of the injection-molded mesh filter 1.

In addition, in the mesh filter 1 injection-molded by the injection molding die 10 and injection molding method according to the embodiment, since the occurrence of burrs in the openings 8 of the filter portion 4 can be suppressed, the filtering function in the filter portion 4 is improved.

### (First modification)

Fig. 3 is a diagram (diagram corresponding to Fig. 2B) illustrating a first modification of the projections 22 for shaping the openings 8 of the mesh the filter portion 4. As illustrated in Fig. 3, the projections 22 for shaping the openings 8 of the filter portion 4 may be formed only in the part of the first die 11 for shaping the filter portion cavity section 16 without being formed in the part of the second die 12 for shaping the filter portion cavity section 16.

### (Second modification)

Fig. 4 is a diagram (diagram corresponds to Fig. 2B) illustrating a second modification of the projections 22 for shaping the openings 8 of the filter portion 4. As illustrated in Fig. 4, the projections 22 for shaping the openings 8 of the filter portion 4 may be formed as the portion for shaping the filter portion cavity section 16 of the first die 11 and the portion for shaping the filter portion cavity section 16 of the second die 12. In the second modification, the heights of the projections 22A and 22B of the first die 11 and the second die 12 are half the height of the projections 22 in the embodiment and the first modification. When the first die 11 and the second die 12 are closed, the top surface of the projections 22A and the top surface of the projections 22B abut against each other.

### (Third modification)

Although virtual lines 25 making connection between the centers of the gates 18 and the center of the inner cylinder cavity section 14 deviate from the second central line 21 by 45 degrees (θ = 45 degrees) in the circumferential direction of the inner cylinder cavity section 14 in the injection molding die 10 according to the embodiment, the invention is not limited to the embodiment and the angle (θ) formed by the virtual lines 25 and the second central line 21 may be any angle other than 45 degrees as long as variations in the filling rate at which the cavity 13 is filled with molten resin can be suppressed and the occurrence of burrs in the openings 8 of the filter portion 4 can be suppressed.

Although the mesh filter 1 injection-molded by the injection molding method and the injection molding die 10 according to the embodiment is installed in the fuel supply pipe connected to the fuel injection apparatus of a vehicle in the above aspect, the mesh filter 1 may be of course installed at an intermediate point of the oil pipe of a lubrication apparatus or the like of a vehicle. The invention is not limited to these examples and the mesh filter 1 can be used in a wide range of technical fields by being installed in the conduit of a water supply pipe or an air duct so as to remove the foreign matter mixed with a fluid (a liquid such as water or a gas such as air).

### Reference Signs List

1: mesh filter
2: inner cylinder
2a: outer surface
2b: one end surface (end surface)
3: outer cylinder
3a: inner surface
4: filter portion
5: central axis
6: vertical rib
7: horizontal rib
8: opening
10: injection molding die
13: cavity
14: inner cylinder cavity section
15: outer cylinder cavity section
16: filter portion cavity section
17: central axis
18: gate
20: first central line
21: second central line

## Claims

1. An injection molding die for a mesh filter used to filter out foreign matter in a fluid,
wherein the mesh filter includes a cylindrical inner cylinder, a cylindrical outer cylinder surrounding the inner cylinder, and a filter portion connecting an outer peripheral surface of the inner cylinder and an inner peripheral surface of the outer cylinder along a radial direction of the inner cylinder,
wherein the filter portion is formed along an X-Y plane that is a virtual plane orthogonal to a central axis of the inner cylinder,
wherein a plurality of rectangular openings is formed in a part of the filter portion, the part being other than the connection portion between the inner cylinder and the outer cylinder, by a plurality of vertical ribs formed at regular intervals so as to be orthogonal to the X-axis and parallel to the Y-axis and a plurality of horizontal ribs formed at regular intervals so as to be orthogonal to the vertical ribs and parallel to the X-axis,
wherein an inner cylinder cavity section for shaping the inner cylinder of a cavity for shaping the mesh filter is provided with four gates opened in positions in which end surfaces of the inner cylinder are shaped, the four gates being formed along the circumferential direction of the inner cylinder cavity section,
wherein the gates are disposed in intermediate parts between a first central line and a second central line on an X-Y plane, the first central line passing through the center of the inner cylinder cavity section in parallel to the X-axis, the second central line passing through the center of the inner cylinder cavity section in parallel to the Y-axis, the X-Y plane being a virtual plane orthogonal to a central axis of the inner cylinder cavity section, and
wherein molten resin having been injected from the gates to the inner cylinder cavity section flows from the inner cylinder cavity section to a filter portion cavity section for shaping the filter portion and then fills an outer cylinder cavity section for shaping the outer cylinder from the filter portion cavity section.

2. An injection molding die for a mesh filter used to filter out foreign matter in a fluid,
wherein the mesh filter includes a cylindrical inner cylinder, a cylindrical outer cylinder surrounding the inner cylinder, and a filter portion connecting an outer peripheral surface of the inner cylinder and an inner peripheral surface of the outer cylinder along a radial direction of the inner cylinder,
wherein the filter portion is formed along an X-Y plane that is a virtual plane orthogonal to a central axis of the inner cylinder,
wherein a plurality of rectangular openings is formed in a part of the filter portion, the part being other than the connection portion between the inner cylinder and the outer cylinder, by a plurality of vertical ribs formed at regular intervals so as to be orthogonal to the X-axis and parallel to the Y-axis and a plurality of horizontal ribs formed at regular intervals so as to be orthogonal to the vertical ribs and parallel to the X-axis,
wherein an inner cylinder cavity section for shaping the inner cylinder of a cavity for shaping the mesh filter is provided with four gates opened in positions in which end surfaces of the inner cylinder are shaped, the four gates being formed along the circumferential direction of the inner cylinder cavity section,
wherein the gates are disposed in positions by rotating 45 degrees from a first central line and a second central line along the circumferential direction of the inner cylinder cavity section, an X-Y plane being a virtual plane orthogonal to a central axis of the inner cylinder cavity section, the first central line passing through the center of the inner cylinder cavity section in parallel to the X-axis on the X-Y plane, the second central line passing through the center of the inner cylinder cavity section in parallel to the Y-axis on the X-Y plane,
wherein molten resin having been injected from the gates to the inner cylinder cavity section flows from the inner cylinder cavity section to a filter portion cavity section for shaping the filter portion and then fills an outer cylinder cavity section for shaping the outer cylinder from the filter portion cavity section.

3. An injection molding method for a mesh filter used to filter out foreign matter in a fluid,
wherein the mesh filter includes a cylindrical inner cylinder, a cylindrical outer cylinder surrounding the inner cylinder, and a filter portion connecting an outer peripheral surface of the inner cylinder and an inner peripheral surface of the outer cylinder along a radial direction of the inner cylinder,
wherein the filter portion is formed along an X-Y plane that is a virtual plane orthogonal to a central axis of the inner cylinder,
wherein a plurality of rectangular openings is formed in a part of the filter portion, the part being other than the connection portion between the inner cylinder and the outer cylinder, by a plurality of vertical ribs formed at regular intervals so as to be orthogonal to the X-axis and parallel to the Y-axis and a plurality of horizontal ribs formed at regular intervals so as to be orthogonal to the vertical ribs and parallel to the X-axis,
wherein an inner cylinder cavity section for shaping the inner cylinder of an injection molding die for the mesh filter is provided with four gates opened in positions in which end surfaces of the inner cylinder are shaped, the four gates being formed along the circumferential direction of the inner cylinder cavity section,
wherein the gates are disposed in intermediate parts between a first central line and a second central line on an X-Y plane, the first central line passing through the center of the inner cylinder cavity section in parallel to the X-axis, the second central line passing through the center of the inner cylinder cavity section in parallel to the Y-axis, the X-Y plane being a virtual plane orthogonal to a central axis of the inner cylinder cavity section, and
wherein the mesh filter is formed by injecting molten resin from the gates to the inner cylinder cavity section, feeding the molten resin having been injected to the inner cylinder cavity section from the inner cylinder cavity section to a filter portion cavity section for shaping the filter portion and then filling an outer cylinder cavity section for shaping the outer cylinder with the molten resin from the filter portion cavity section.

4. An injection molding method for a mesh filter used to filter out foreign matter in a fluid,
wherein the mesh filter includes a cylindrical inner cylinder, a cylindrical outer cylinder surrounding the inner cylinder, and a filter portion connecting an outer peripheral surface of the inner cylinder and an inner peripheral surface of the outer cylinder along a radial direction of the inner cylinder,
wherein the filter portion is formed along an X-Y plane that is a virtual plane orthogonal to a central axis of the inner cylinder,
wherein a plurality of rectangular openings is formed in a part of the filter portion, the part being other than the connection portion between the inner cylinder and the outer cylinder, by a plurality of vertical ribs formed at regular intervals so as to be orthogonal to the X-axis and parallel to the Y-axis and a plurality of horizontal ribs formed at regular intervals so as to be orthogonal to the vertical ribs and parallel to the X-axis,
wherein an inner cylinder cavity section for shaping the inner cylinder of an injection molding die for the mesh filter is provided with four gates opened in positions in which end surfaces of the inner cylinder are shaped, the four gates being formed along the circumferential direction of the inner cylinder cavity section,
wherein the gates are disposed in positions by rotating 45 degrees from a first central line and a second central line along the circumferential direction of the inner cylinder cavity section, an X-Y plane being a virtual plane orthogonal to a central axis of the inner cylinder cavity section, the first central line passing through the center of the inner cylinder cavity section in parallel to the X-axis on the X-Y plane, the second central line passing through the center of the inner cylinder cavity section in parallel to the Y-axis on the X-Y plane, and
wherein the mesh filter is formed by injecting molten resin from the gates to the inner cylinder cavity section, feeding the molten resin having been injected to the inner cylinder cavity section from the inner cylinder cavity section to a filter portion cavity section for shaping the filter portion and then filling an outer cylinder cavity section for shaping the outer cylinder with the molten resin from the filter portion cavity section.
